# EUROPÄISCHE PATENTSCHRIFT

(11) **EP 0 856 669 B1**
(45) Veröffentlichungstag und Bekanntmachung des Hinweises auf die Patenterteilung: **09.07.2003**
(21) Anmeldenummer: 98810007.9
(22) Anmeldetag: 09.01.1998
(51) Int. Cl.: F16B 13/14

(54) **Ankerstange für Verbundanker**
Anchoring bar for compound anchor
Barre d'ancrage pour dispositif d'ancrage composite

(30) Priorität: 04.02.1997 DE 19704002
(43) Veröffentlichungstag der Anmeldung: 05.08.1998
(73) Patentinhaber: HILTI Aktiengesellschaft, 9494 Schaan (LI)
(72) Erfinder: Leibhard, Erich, 81476 München (DE); Ludwig, Wolfgang, 86830 Schwabmünchen (DE)
(74) Vertreter: Wildi, Roland

(56) Entgegenhaltungen:
- WO-A-88/07141
- GB-A- 2 142 998
- US-A- 5 263 804

## Beschreibung

Die Erfindung betrifft eine Ankerstange für Verbundanker, die mittels einer aushärtbaren organischen und/oder anorganischen Mörtelmasse in einer Aufnahmebohrung befestigt wird, gemäss dem Oberbegriff des Patentanspruchs 1.

Für die Erstellung von weitgehend spreizdruckfreien Befestigungen haben sich zwei Verankerungsmethoden bewährt. Die eine besteht darin, einen Anker mit ausstellbaren Segmenten in einer Hinterschneidung am Grund der Aufnahmebohrung zu befestigen. Die Segmente werden in den Bereich der Hinterschneidung ausgeklappt und halten den Anker axial durch Formschluss mit der Hinterschneidung. Diese Befestigungsmethode ist relativ aufwendig. Zuerst muss eine Aufnahmebohrung erstellt werden und danach mittels eines speziellen Werkzeugs in einer vorbestimmten Tiefe der Aufnahmebohrung ein Hinterschnitt erzeugt werden. Erst dann kann der Anker in die Aufnahmebohrung eingesetzt werden. Das Ausklappen der Haltesegmente erfolgt beispielsweise durch das axiale Einziehen oder Ausdrücken eines Konus. Die Befestigung ist je nach Winkel der Bohrlochwandung im Übergang zur Hinterschneidung weitgehend spreizdruckfrei.

Eine einfachere Methode zur Erstellung spreizdruckfreier Verankerungen besteht darin, eine Ankerstange mit Hilfe einer aushärtbaren organischen und/oder anorganischen Mörtelmasse in der Aufnahmebohrung zu befestigen. Zu diesem Zweck wird nach der Erstellung der Aufnahmebohrung die Mörtelmasse in die Aufnahmebohrung eingefüllt. In der Regel handelt es sich bei den verwendeten Mörtelmassen um mehrkomponentige Systeme mit Reaktivkomponenten und Zuschlagstoffen, die getrennt voneinander aufbewahrt werden müssen. Die Härtungsreaktion wird erst bei Kontakt und Vermischung der Komponenten miteinander innerhalb der Aufnahmebohrung ausgelöst. Die miteinander reagierenden Komponenten der Mörtelmasse liegen beispielsweise in Glasampullen oder in Folienbeuteln getrennt voneinander vor und werden in die Aufnahmebohrung eingeschoben. Durch das anschliessende Einbringen der Ankerstange werden die Glasampullen bzw. die Folienbeutel aufgebrochen, und die Komponenten kommen miteinander in Kontakt. Für die Festigkeit des Verbundmörtels und für die Erzielung möglichst hoher Auszugswerte ist es wichtig, dass die Komponenten der Mörtelmasse innig miteinander vermischt werden. Deshalb wird die Ankerstange üblicherweise um ihre Längsachse rotierend in die Aufnahmebohrung eingebracht. Profilierungen im Verankerungsbereich der Ankerstange sollen die Durchmischung der Komponenten verbessern. Neben der Durchmischung der Komponenten der Mörtelmasse hat die Ankerstange auch die Aufgabe, die Glasampullen bzw. die Folienbeutel zu zerkleinern. Dies muss in einem Umfang erfolgen, dass es zu keiner Beeinträchtigung der Haltewerte durch an der Bohrlochwandung anhaftende grössere Reststücke der Glasampullen bzw. der Folie kommt.

Die WO-A-88/07141 zeigt beispielsweise eine Ankerstange, die die gemischte Mörtelmasse über die axiale Länge der Ankerstange verdrängt. Mit den mehreren, radial zur Dübelachse ausgerichteten Konusabschnitten wird ein gutes Nachspreizverhalten der Ankerstange erreicht. Die beschichteten Konusoberflächen drücken den gehärteten Mörtel radial nach aussen, was für das Nachspreizverhalten als wesentlich dargelegt wird. Die Ankerstange weist in einer gezeigten Ausführungsform einen Mischkopf auf, der seinerseits ein Aussengewinde aufweist. Mit einer solchen Ankerstange erfolgt die Verteilung der gemischten Mörtelmasse über die axiale Länge der Ankerstange vergleichsweise unzuverlässig.

Während mit den bekannten Ankerstangengeometrien in der Regel eine ausreichende Durchmischung der Komponenten und auch eine im wesentlichen zufriedenstellende Zerkleinerung der die Komponenten enthaltenden Gebinde erzielt werden kann, besteht doch der Wunsch nach weiteren Verbesserungen. Der Zerkleinerungsvorgang soll schneller durchführbar sein. Die Gebinde, insbesondere Folienbeutel, sollen noch besser zerkleinert werden. Es soll verhindert werden, dass sich Teile der Komponenten der Mörtelmasse weitgehend unvermischt am Grund der Aufnahmebohrung absetzen. Die Mörtelmasse soll möglichst homogen gemischt und über die axiale Länge des Verankerungsbereichs der Ankerstange verteilt werden. Zugleich soll die Mörtelmasse während des Mischvorgangs am Austreten aus der Aufnahmebohrung gehindert werden. Der rückwärtige Abschnitt der Ankerstange, der mit Mitteln für den Lastangriff, beispielsweise einem Aussengewinde, versehen ist, soll frei von der Mörtelmasse bleiben. Ein weiterer, nicht unerheblicher Aspekt der Erfindung besteht darin, eine Ankerstange für einen Verbundanker zu schaffen, der in einer sich öffnenden Aufnahmebohrung ein gutes Nachspreizverhalten aufweist. Die Ankerstange soll eine Geometrie und Beschaffenheit aufweisen, welche die Risstauglichkeit des Verbundankers gewährleistet. Dabei soll die Ankerstange in einem Schritt befestigbar sein und abgesehen von einem Dreh-Schlag-Bohrgerät keinen Einsatz von zusätzlichen Hilfsmitteln erfordern.

Die Lösung dieser teils widersprüchlichen Aufgaben besteht in einer Ankerstange, welche die im kennzeichnenden Abschnitt des Patentanspruchs 1 angeführten Merkmale aufweist. Die erfindungsgemässe Ankerstange für Verbundanker weist einen Verankerungsbereich auf, der in eine aushärtbare organische und/oder anorganische Mörtelmasse einsetzbar ist. In dem an den Verankerungsbereich anschliessenden, rückwärtigen Bereich der Ankerstange sind Mittel für den Lastangriff vorgesehen. Der Verankerungsbereich ist dreigeteilt und umfasst einen vorderen Mischabschnitt, der von einem Kopfteil gebildet ist, das an seinem freien Ende eine im wesentlichen senkrecht zur Achse der Ankerstange verlaufende Schneide aufweist. An den Mischabschnitt schliesst ein Förderabschnitt an, der seinerseits an einen rückwärtigen Verdichtungsabschnitt angrenzt. Das Kopfteil weist einen Bereich mit einem Aussendurchmesser auf, der grösser ist als der grösste Durchmesser der an den Mischabschnitt anschliessenden Abschnitte des Verankerungsbereichs, und ist mit Fördereinrichtungen für die Mörtelmasse ausgestattet.

Durch die erfindungsgemässe Merkmalskombination wird die in die Aufnahmebohrung eingebrachte organische und/oder anorganische Mörtelmasse innig gemischt und über den gesamten Verankerungsbereich verteilt. Die am freien Vorderende der Ankerstange vorgesehene Schneide dient dem Aufbrechen und dem Zerkleinern des Gebindes, in dem der Mörtel angeordnet ist. Da das Kopfteil einen Bereich mit einem grösseren Aussendurchmesser aufweist als die daran anschliessenden Abschnitte des Verankerungsbereichs, ist am Kopfteil der Ringspalt zwischen der Bohrlochwandung und der Ankerstange enger als an den anschliessenden rückwärtigen Abschnitten. Der enge Ringspalt fördert die Zerkleinerung des die Mörtelmasse enthaltenden Gebindes. Dabei kann der Mörtel in Glasampullen oder in Folienbeuteln vorgelegt werden. Insbesondere bei Folienbeuteln wird durch den engen Ringspalt die Zerkleinerung der Folie begünstigt. Durch die Rotation der Ankerstange wird die aus dem Gebinde freigesetzte Mörtelmasse innig gemischt. Dabei wird der Mischvorgang durch die Enge des Ringspaltes unterstützt. Dies ist besonders bei zwei- oder mehrkomponentigen Mörtelsystemen, beispielsweise einer Harzkomponente und einer Härterkomponente, gegebenenfalls noch ergänzt um Füllstoffe, von Vorteil, bei denen eine möglichst homogene Durchmischung der Komponenten angestrebt wird. Die Fördereinrichtungen am Kopfteil transportieren die gemischte Mörtelmasse nach rückwärts zu dem an den Mischabschnitt anschliessenden Förderabschnitt. Von dort wird die Mörtelmasse rasch aus dem vordersten Verankerungsbereich abtransportiert, um zu verhindern, dass der bereits gut durchmischte Mörtelanteil im Mischabschnitt verbleibt und bei der weiteren Rotation der Ankerstange überhitzt wird. Der Abtransport der gemischten Mörtelmasse wird durch die über die axiale Länge der Ankerstange unterschiedliche Breite des Ringspaltes zwischen der Ankerstange und der Bohrlochwandung unterstützt, indem sich über die axiale Tiefe der Bohrung ein Druckgradient ausbildet, der die Verteilung der gemischten Mörtelmasse im gesamten Bohrloch begünstigt. Durch den raschen Abtransport des gemischten Mörtelanteils können die noch ungemischten Bestandteile der Mörtelmasse in den Mischabschnitt gelangen, um dort innig miteinander vermischt zu werden. In dem an den Förderabschnitt anschliessenden Verdichtungsabschnitt des Verankerungsbereichs wird der Fördervorgang der Mörtelmasse verlangsamt und schliesslich unterbrochen. Damit ist sichergestellt, dass die gut durchmischte Mörtelmasse im Verankerungsbereich der Ankerstange verbleibt und nicht aus der Aufnahmebohrung austritt und den mit den Lastangriffsmitteln versehenen Abschnitt der Ankerstange verunreinigt.

Der Aussendurchmesser des Bereichs des Kopfteils, der den grössten Durchmesser der anschliessenden Abschnitte des Verankerungsbereichs übersteigt, beträgt mit Vorteil etwa das 1,05-fache bis etwa das 1,07-fache des grössten Durchmessers im Förderabschitt bzw. im Verdichtungsabschnitt. Mit diesen Durchmesserverhältnissen werden die widersprüchlichen Aufgaben, einerseits für eine zuverlässige Zerkleinerung des Gebindes, insbesondere der Folie bei Foliengebinden, und eine gute Durchmischung der Mörtelmasse zu sorgen und andererseits die gemischte Masse möglichst rasch aus dem Mischabschnitt abzutransportieren und über den Verankerungsbereich zu verteilen, besonders gut gelöst.

Die grobgewindeartige Profilierung des Förderbereichs erlaubt den raschen Abtransport einer grösseren Mörtelmenge, die auf diese Weise möglichst gleichmässig über den gesamten Verankerungsbereich verteilt wird. Die konusähnlichen Abschnitte des Förderabschnitts unterstützen das Nachspreizverhalten des Verbundankers, beispielsweise im gerissenen Beton bei einer sich öffnenden Aufnahmebohrung, und führt zu einer besseren Einleitung des Spreizdrucks über die Länge des Verankerungsbereiches.

Für die verschiedenen Funktionen des Mischabschnittes ist es von Vorteil, wenn das Kopfteil sich zum freien Ende hin konisch erweitert und in den durchmessergrössten Bereich mündet, der zylindrisch ausgebildet ist und an seinem freien Vorderende die Schneide trägt. Die Länge des zylindrischen Bereichs beträgt vorzugsweise etwa 50% bis etwa 75 % der axialen Länge des Kopfteils. Der enge Ringspalt zwischen dem zylindrischen Bereich und der Bohrlochwandung erstreckt sich über einen relativ grossen Teil der axialen Länge des Kopfteils. Auf diese Weise steht ein grösserer Abschnitt des Kopfteils zur Zerkleinerung des Gebindes zu Verfügung. Die Mörtelmasse befindet sich eine längere Zeit in dem engen Ringspalt und wird besser gemischt. Der sich konisch zum Förderabschnitt verjüngende Bereich des Kopfteils führt zu einer kontinuierlichen Erweiterung des Ringspalts. Der entstehende Druckgradient fördert die Weiterleitung der Mörtelmasse zum Förderabschnitt, wo sie rasch nach rückwärts zum Verdichtungsabschnitt abtransportiert wird.

Die Fördereinrichtungen sind mit Vorteil im durchmessergrössten Bereich des Kopfteils angeordnet und von einer Profilierung der Umfangsfläche gebildet. Die Profilierung der Umfangsfläche des durchmessergrössten Bereichs unterstützt den Transport der Mörtelmasse zum Förderabschnitt. Gleichzeitig fördert die Profilierung auch die Durchmischung der aus dem Gebinde freigesetzten Mörtelmasse.

In einer einfach herstellbaren und zweckmässigen Variante der Erfindung ist die Profilierung der Mantelfläche eine Rändelung in Form von im wesentlichen axial verlaufenden Rillen, die sich vom freien Vorderende zum Förderabschnitt erstrecken. Die Rändelung kann sehr einfach, beispielsweise in einem Kaltwalzprozess hergestellt werden. Gleichzeitig kann dabei auch der Aussendurchmesser des bearbeiteten Bereichs des Kopfteils im gewünschten Ausmass vergrössert werden.

Für den Mischvorgang und für den Massentransport erweisen sich Rillen mit einer Tiefe von etwa 0,5 mm bis etwa 2,5 mm und einer grössten Breite von etwa 1 mm bis etwa 3 mm von Vorteil. Indem die Rillen vom Rillengrund schräg zum Mantel verlaufende Flanken aufweisen, die unter Bildung einer im wesentlichen axial verlaufenden Kante am Mantel spitzwinklig auf die Flanken benachbarter Rillen treffen, kann die Zerkleinerung des Gebindes unterstützt werden. Insbesondere bei Foliengebinden helfen die scharfen Kanten am Umfang des Kopfteils bei der Zerkleinerung der Folie.

In einer alternativen Ausführungsvariante der Erfindung sind die Fördereinrichtungen gewindeartige Profilierungen in der Umfangsfläche des Kopfteils, deren Drehsinn mit dem Drehsinn des grobgewindeartig profilierten Förderabschnitts übereinstimmt. In den gewindeartigen Profilierungen des Kopfteils wird die Mörtelmasse wie in einer Förderschnecke transportiert und dabei auch gemischt. Indem die gewindeartige Profilierung des Kopfteils und des Grobgewindes im Förderabschnitt den gleichen Drehsinn aufweisen, wird die Massenförderung vom freien Vorderende der Ankerstange über den gesamten Verankerungsbereich nicht behindert.

Die grobgewindeartige Profilierung des Föderabschnitts weist mit Vorteil eine grössere Gewindesteigung und Gewindetiefe auf als die gewindeartige Profilierung des Kopfteils. Durch diese konstruktive Massnahme sind der Mischabschnitt und der Förderabschnitt klar getrennt. Die Komponenten der Mörtelmasse werden durch den feineren Gewindebereich am Kopfteil gut durchmischt. Im Förderabschnitt mit grobgewindeartiger Profilierung erfolgt nur noch ein Abtransport der gemischten Mörtelmasse. Die grosse Gewindesteigung und die relativ grosse Gewindetiefe der Profilierung sind nur für den schnellen Transport einer grossen Mörtelmenge ausgelegt. Somit kommt es im Förderbereich praktisch kaum zu einer nennenswerten weiteren Durchmischung der Mörtelmasse.

Die erfindungsgemässe Ankerstange ist sehr einfach und ohne zusätzliche Hilfsmittel in einer vorbereiteten Aufnahmebohrung zu befestigen. Es wird lediglich ein Dreh-Schlag-Bohrgerät benötigt, das ohnehin schon von der Erstellung der Aufnahmebohrung her zur Verfügung steht. Die Ankerstange wird mit ihrem rückwärtigen Ende in die Werkzeugaufnahme des Dreh-Schlag Bohrgerätes eingesteckt. Das Setzen der Ankerstange in die mit einem Mörtelgebinde bestückte Aufnahmebohrung erfolgt in der gewohnten Art, indem die Ankerstange drehend-schlagend in die Aufnahmebohrung eingeschoben wird.

Die Gewindesteigung der grobgewindeartigen Profilierung des Förderabschnitts kann zum Verdichtungsabschnitt hin abnehmen. Dadurch wird die Fördergeschwindigkeit der über den Verankerungsbereich verteilten gemischten Mörtelmasse nach rückwärts hin verlangsamt, und es erfolgt bereits eine gewisse Vorverdichtung der Mörtelmasse. Dadurch wird die Wirkung des Verdichtungsabschnittes noch weiter unterstützt, und es ist gewährleistet, dass keine Mörtelmasse aus der Aufnahmebohrung austritt und den Anschlussabschnitt der Ankerstange verunreinigt. Die Verringerung der Gewindesteigung in Richtung des Verdichtungsabschnitts bedingt auch eine Verkürzung der konusartigen Bereiche des Förderabschnitts. Auch der Verdichtungsabschnitt kann mit wenigstens einem konusförmigen Bereich ausgestattet sein, der sich zum freien Vorderende hin erweitert. Dieser Konus trägt ebenfalls zum Nachspreizverhalten des Verbundankers bei, und die Haltewerte können, beispielsweise im gerissenen Beton, erhöht werden. Die Schneide am freien Vorderende wird zweckmässigerweise durch eine keilförmige Abschrägung des Kopfteils gebildet, die sich bis zur Umfangsfläche des Kopfteils erstreckt. Die Schneide ist für das Aufbrechen und die zuverlässige Zerkleinerung sowohl von Glasgebinden als auch von Folienbeuteln geeignet, in denen die Mörtelkomponenten untergebracht sind. Indem die Abschrägung unter einem Winkel von etwa 45° gegenüber der Achse der Ankerstange geneigt verläuft, werden die axialen Schläge des Dreh-Schlag-Bohrgeräts besonders gut auf das Gebinde übertragen, und das Gebinde wird bei der Rotation der Ankerstange zerkleinert, ohne es zu verdichten. Damit sich die Ankerstange und die Mörtelmasse im Rissfall zuverlässig voneinander lösen und die Ankerstange nachspreizen kann, weist die Oberfläche des Verankerungsbereichs gegenüber der organischen und/oder anorganischen Mörtelmasse vorzugsweise nichthaftende Eigenschaften auf. Aus fertigungstechnischer Sicht erweist es sich dabei von Vorteil, wenn die Oberfläche des Verankerungsbereichs galvanisch glanzvernickelt ist. Dieser Fertigungsschritt kann auf kostengünstige Weise in die Serienproduktion integriert sein. Die Ankerstange weist die gewünschte Oberflächenbeschaffenheit auf und ist überdies gegenüber korrosiven Angriffen geschützt.

Im folgenden wird die Erfindung unter Bezugnahme auf die in den Figuren schematisch dargestellten Ausführungsbeispiele näher erläutert. Es zeigen in unterschiedlichen Massstäben:
Fig. 1 ein erstes Ausführungsbeispiel einer erfindungsgemässen Ankerstange;
Fig. 2 einen Querschnitt gemäss Schnittlinie ll-ll in Fig. 1; und
Fig. 3 ein zweites Ausführungsbeispiel der Ankerstange gemäss der Erfindung.

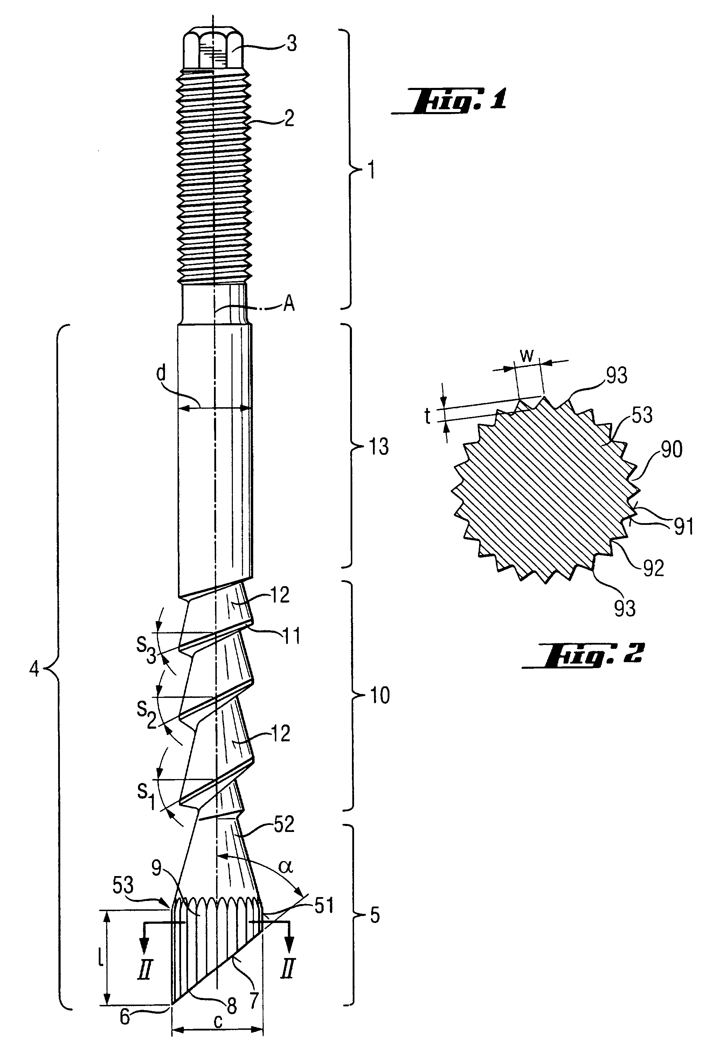

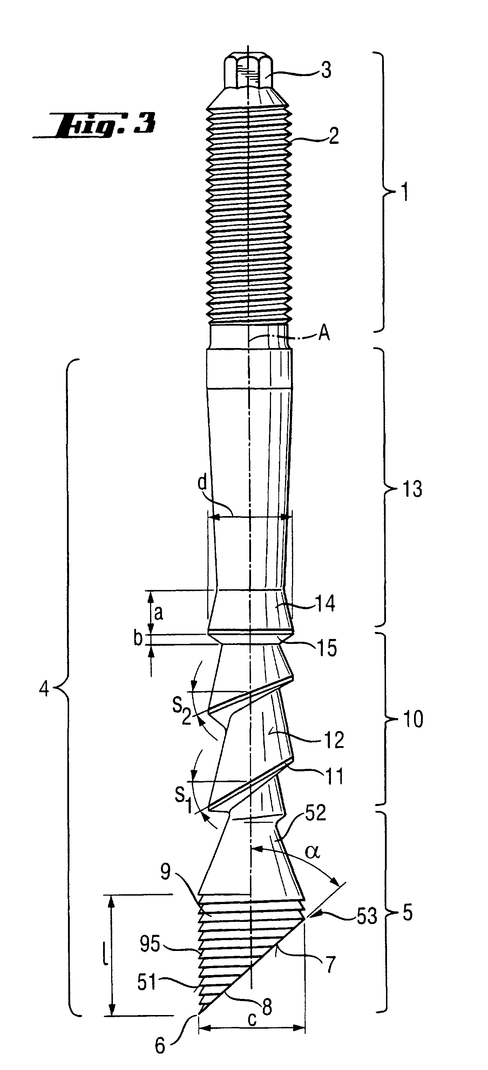

Die in den Fig. 1 und 3 beispielsweise dargestellten Ausführungsvarianten der erfindungsgemässen Ankerstange für Verbundanker weisen einen rückwärtigen Anschlussbereich 1 auf, der mit einem Aussengewinde 2 als Lastangriffsmittel versehen ist. Am rückwärtigen Ende der Ankerstange, das im gesetzten Zustand in der Regel aus der Aufnahmebohrung ragt, ist ein Ansteckende 3 angeformt, mit dem die Ankerstange zum Setzen in die Werzeugaufnahme eines nicht dargestellten Dreh-Schlag-Bohrgeräts, beispielsweise eines Hammerbohrgeräts der Anmelderin, einsteckbar ist. An den Anschlussbereich 1 der Ankerstange schliesst ein Verankerungsbereich 4 an, der in eine aushärtbare organische und/oder anorganische Mörtelmasse einsetzbar und im gesetzten Zustand in die ausgehärtete Mörtelmasse eingebettet ist.

Der dem Bohrlochgrund zugewandte vorderste Abschnitt des Verankerungsbereichs 4 ist als Mischabschnitt ausgebildet und umfasst ein Kopfteil 5, an dessen freiem Vorderende 6 eine Schneide 7 vorgesehen ist, die sich etwa senkrecht zur Achse A der Ankerstange erstreckt. Zur Bildung der Schneide 7 ist das Kopfteil 5 im vorderen Bereich mit einer Abschrägung 8 versehen, die unter einem Winkel α von vorzugsweise etwa 45° gegenüber der Achse A der Ankerstange geneigt verläuft und sich bis zur Umfangsfläche 51 des Kopfteils 5 erstreckt. Das Kopfteil 5 besitzt einen sich in Richtung des freien Vorderendes 6 konisch erweiternden Abschnitt 52, der in einen zylindrischen Bereich 53 mündet. Die Schneide 7 ist am freien Ende des zylindrischen Bereichs 53 des Kopfteils 5 angeordnet. Der zylindrische Bereich 53 besitzt eine Länge I, die etwa 50% bis etwa 75% der axialen Länge des Kopfteils 5 beträgt.

An das Kopfteil 5 schliesst ein Förderabschnitt 10 an, der eine Profilierung nach Art eines Grobgewindes 11 aufweist. Der Drehsinn des Grobgewindes 11 ist derart gewählt, dass die Mörtelmasse bei Rotation der Ankerstange um ihre Achse A wie in einer Förderschnecke, vom Kopfteil 5 weg, nach rückwärts transportiert wird. Das Grobgewinde 11 wird durch konusartige Abschnitte 12 gebildet, die sich in Richtung des freien Vorderendes 6 der Ankerstange erweitern.

An den Förderabschnitt 10 schliesst nach rückwärts ein Verdichtungsabschnitt 13 an, der als Förderstopp für die Mörtelmasse dient. Gemäss dem in Fig. 1 dargestellten Ausführungsbeispiel ist der Verdichtungsabschnitt 13 im wesentlichen zylindrisch ausgebildet und weist einen Durchmesser auf, der etwa dem Aussendurchmesser des mit dem Aussengwinde 2 versehenen rückwärtigen Anschlussbereichs 1 entspricht. Bei dem in Fig. 3 dargestellten Ausführungsbeispiel der Ankerstange ist am Verdichtungsabschnitt wenigstens ein Konus 14 vorgesehen, der im Anschluss an eine Einschnürung der Ankerstange anfangs des Verdichtungsabschnitts 13 angeordnet ist und sich in Richtung des freien Vorderendes 6 erweitert. Wie beispielsweise dargestellt, schliesst an den Konus 14 in dessen durchmessergrössten Bereich ein Gegenkonus 15 an, der sich zum letzen Konusabschnitt des Grobgewindes hin wieder verjüngt. Die axiale Länge b des Gegenkonus 15 beträgt dabei etwa 1/4 bis etwa 2/3 der Länge a des Konus 14 im Verdichtungsabschnitt 13. Während in Fig. 3 nur ein einziger Konus 14 mit Gegenkonus 15 dargestellt ist, können auch mehrere Konen mit zugeordneten Gegenkonen hintereinander angeordnet sein. Die Konen können dabei jeweils gleich lang sein; ihre Länge kann auch in Richtung des rückwärtigen Bereichs 1 abnehmen. Bei dem in Fig. 3 dargestellten Ausführungsbeispiel besitzt der Verdichtungsbereich seinen grössten Durchmesser d am Konus 14.

Bei beiden dargestellten Ausführungsbeispielen weist der zylindrische Bereich 53 des Kopfteils 5 einen Aussendurchmesser c auf, der grösser ist als der grösste Durchmesser d der übrigen Abschnitte 10, 13 des Verankerungsbereichs 4. Gemäss Fig. 1 ist der letztere grösste Durchmesser d durch den Durchmesser des zylindrischen Verdichtungsabschnitts 10 gegeben. Im Ausführungsbeispiels gemäss Fig. 3 besitzen der Förderabschnitt 10 und der Verdichtungsabschnitt 13 ihren grössten Durchmesser d am Konus 14 anfangs des Verdichtungsbereichs 13. Insbesondere steht der Aussendurchmesser c zum grössten Durchmesser d der übrigen Abschnitte 10, 13 des Verankerungsbereichs 4 im Verhältnis von etwa 1,05 bis etwa 1,07.

Abgesehen von den verschieden ausgebildeten Verdichtungsabschnitten besteht ein weiterer wesentlicher Unterschied der beiden in Fig. 1 bzw. in Fig. 3 dargestellten Ausführungsvarianten der Erfindung in der Ausbildung von Fördereinrichtungen 9, die im durchmessergrössten zylindrischen Bereich 53 des Kopfteils 5 vorgesehen sind. Gemäss Fig. 1 bestehen die Fördereinrichtungen 9 aus einer Rändelung der Umfangsfläche 51. Durch die Rändelung werden etwa axial verlaufende Rillen 90 gebildet, die sich vom mit der Schneide 7 ausgestatteten freien Vorderende 6 zum konischen Abschnitt 52 des Kopfteils 5 erstrecken.

Aus der Querschnittsdarstellung in Fig. 2 ist ersichtlich, dass die Rillen 90 Flanken 91 aufweisen, die sich vom Rillengrund 92 schräg zur Umfangsfläche 51 erstrecken. Dort treffen sie unter spitzem Winkel auf die Flanken 91 benachbarter Rillen 90 und bilden an der Umfangsfläche 51 eine scharfe Kante 93. Die derart mit Zahnleisten versehene Umfangsfläche 52 unterstützt bei der Rotation der Ankerstange in der Aufnahmebohrung die Zerkleinerung des Gebindes, beispielsweise einer Folie aus Kunststoff. Die Tiefe t der Rillen beträgt von etwa 0,5 mm bis etwa 2,5 mm. Die grösste Weite w der Rillen beträgt etwa 1 mm bis etwa 3 mm.

In dem in Fig. 3 dargestellten Ausführungsbeispiel bestehen die Fördereinrichtungen 9 aus einer gewindeartigen Profilierung 95, die in der Umfangsfläche 51 des zylindrischen Bereiches 53 des Kopfteils 5 vorgesehen ist. Die gewindeartige Profilierung 95 besitzt den gleichen Drehsinn wie das Grobgewinde 11 des Förderabschnitts 10. Die Steigung s₁, s₂, s₃ des Grobgewindes 11 und seine Gewindetiefe ist grösser als die Steigung und die Gewindetiefe der gewindeartigen Profilierung an der Umfangsfläche 51 des Kopfteils 5.

Die am Beispiel von zwei Ausführungsvarianten erläuterte, erfindungsgemässe Ankerstange gewährleistet eine zuverlässige Zerkleinerung des Gebindes, in dem die Mörtelmasse, bzw. seine Komponenten enhalten sind. Durch die erfindungsgemässe geometrische Ausbildung des Verankerungsbereichs der Ankerstange werden die einzelnen Komponenten von zwei- oder mehrkomponentigen Mörtelsystemen innig gemischt. Die gemischte Mörtelmasse wird gleichmässig über den Verankerungsbereich der Ankerstange verteilt und am Austreten aus der Aufnahmebohrung gehindert. Die erfindungsgemässe Geometrie der Ankerstange unterstützt auch das Nachspreizverhalten der Ankerstange, wodurch sie auch in gerissenem Untergrund, bei sich öfnendem Riss ausreichend hohe Haltewerte gewährleistet. Indem die Oberfläche des Verankerungsbereichs derart behandelt ist, dass sie gegenüber der ausgehärteten Mörtelmasse nichthaftende Eigenschaften aufweist, kann das Nachspreizverhalten der Ankerstange noch weiter verbessert werden. Vorzugsweise ist die Oberfläche der Ankerstange daher wenigstens im Verankerungsbereich galvanisch glanzvernickelt und/oder verchromt.

## Patentansprüche

1. Ankerstange für Verbundanker mit einem Verankerungsbereich (4), der in eine aushärtbare anorganische und/oder organische Mörtelmasse einsetzbar ist, und einem daran anschliessenden, rückwärtigen Bereich (1), der mit Mitteln (2) für den Lastangriff ausgestattet ist, der Verankerungsbereich (4) umfasst einen vorderen Mischabschnitt (5), einen daran anschliessenden Förderabschnitt (10) und einen an diesen angrenzenden Verdichtungsabschitt (13), wobei der Mischabschnitt (5) von einem Kopfteil gebildet ist, das an seinem freien Ende (6) mit einer im wesentlichen senkrecht zur Achse (A) der Ankerstange verlaufenden Schneide (7) ausgestattet ist und einen Bereich (53) mit einem Aussendurchmesser (c) aufweist, der grösser ist als der grösste Durchmesser (d) der übrigen Abschnitte (10, 13) des Verankerungsbereichs (4), am Kopfteil (5) sind Fördereinrichtungen (9) für die Mörtelmasse vorgesehen, **dadurch gekennzeichnet, dass** der Förderabschnitt (10) nach Art eines Grobgewindes (11) profiliert ist und etwa konusartig ausgebildete Abschnitte (12) aufweist, die in Richtung des freien Vorderendes (6) erweitert ausgebildet sind.

2. Ankerstange nach Anspruch 1, **dadurch gekennzeichnet, dass** der den grössten Durchmesser (d) der an das Kopfteil (5) anschliessenden Abschnitte (10, 13) übersteigende Aussendurchmesser (c) etwa das 1,05-fache bis etwa das 1,07-fache des grössten Durchmessers (d) beträgt.

3. Ankerstange nach Anspruch 1 oder 2, **dadurch gekennzeichnet, dass** das Kopfteil (5) sich zum freien Ende (6) hin konisch erweitert und in den durchmessergrössten Bereich (53) mündet, der eine zylindrische Form einer Länge (I) besitzt, die etwa 50% bis etwa 75% der Länge des Kopfteils (5) entspricht, und am freien Vorderende (6) die Schneide (7) aufweist.

4. Ankerstange nach einem der Ansprüche 1 bis 3, **dadurch gekennzeichnet, dass** die Fördereinrichtungen (9) im durchmessergrössten Bereich (53) des Kopfteils (5) angeordnet sind und von einer Profilierung der Umfangsfläche (51) gebildet sind.

5. Ankerstange nach Anspruch 4, **dadurch gekennzeichnet, dass** die Profilierung der Umfangsfläche (51) eine Rändelung in Form von im wesentlichen axial verlaufenden Rillen (90) ist, die sich vom freien Vorderende (6) zum Förderabschnitt (10) erstrekken.

6. Ankerstange nach Anspruch 5, **dadurch gekennzeichnet, dass** die Rillen (90) eine Tiefe (t) von etwa 0,5 mm bis etwa 2,5 mm und eine grösste Weite (w) von etwa 1 mm bis etwa 3 mm aufweisen und vom Rillengrund (92) schräg zur Umfangsfläche (51) verlaufende Flanken (91) besitzen, die unter Bildung einer im wesentlichen axial verlaufenden Kante (93) an der Umfangsfläche (51) spitzwinklig auf die Flanken (91) benachbarter Rillen (90) treffen.

7. Ankerstange nach einem der Ansprüche 2 bis 4, **dadurch gekennzeichnet, dass** die Fördereinrichtungen (9) gewindeartige Profilierungen (95) in der Umfangsfläche (51) des Kopfteils (5) sind, deren Drehsinn mit dem Drehsinn des grobgewindeartig profilierten Förderabschnitts (10) übereinstimmt.

8. Ankerstange nach Anspruch 7, **dadurch gekennzeichnet, dass** die grobgewindeartige Profilierung (11) des Föderabschnitts (10) eine grössere Gewindesteigung (s1, s2, s3) und Gewindetiefe (t) aufweist als die gewindeartigen Profilierungen (95) des Kopfteils (5).

9. Ankerstange nach einem der Ansprüche 1 bis 8, **dadurch gekennzeichnet, dass** der Verankerungsbereich (4) eine gegenüber der organischen und/oder anorganischen Mörtelmasse nichthaftende Oberfläche aufweist und vorzugsweise galvanisch glanzvernickelt und/oder verchromt ist.

## Claims

1. Anchoring bar for compound anchor, comprising an anchoring area (4) which is insertible into a curable inorganic and/or organic mortar substance, a thereto adjacent rearward area (1) which is equipped with means (2) for engaging a load, the anchoring area (4) covers a front mixing section (5), a thereto adjacent conveying section (10) and bordering therewith a compression section (13), and the mixing section (5) is formed by a head section which is at its free end (6) equipped with a cutter (7) which extends essentially perpendicularly to the axis (A) of the anchoring bar and comprises an area (53) with an outside diameter (c) of more than the largest diameter (d) of the other sections (10, 13) of the anchoring area (4), and at the head section (5) are provided conveying means (9) for the mortar substance, **characterised in that** the conveying section (10) is profiled in the manner of a coarse thread (11) and comprises approximately conically designed sections (12) which are designed to be expanded in the direction of the free front end (6).

2. Anchoring bar according to Claim 1, **characterised in that** the outside diameter (c) which exceeds the largest diameter (d) of the sections (10, 13) adjacent to the head section (5) is approximately between 1.05 times and approximately 1.07 times the size of the largest diameter (d).

3. Anchoring bar according to Claim 1 or 2, **characterised in that** the head section (5) conically expands towards the free end (6) and terminates in the area of largest diameter (53) which is in its length (I) of cylindrical shape which equals between approximately 50% and approximately 75% of the length of the head section (5), and has a cutter (7) at the free front end (6).

4. Anchoring bar according to one of Claims 1 to 3, **characterised in that** the conveying means (9) are arranged in the diametrically largest area (53) of the head section (5) and formed by profiles at the peripheral surface (51).

5. Anchoring bar according to Claim 4, **characterised in that** the profile of the peripheral surface (51) is a knurl in the form of essentially axially extending grooves (9) which extend from the free front end (6) to the conveying section (10).

6. Anchoring bar according to Claim 5, **characterised in that** the grooves (9) have a depth (t) of between approximately 0.5 mm and approximately 2.5 mm and a largest width (w) between approximately 1 mm approximately 3 mm, and they have flanks (91) extending from the groove base (92) transversely to the peripheral surface (51) which, whilst forming an essentially axially extending edge (93), meet the flanks (91) of adjacent grooves (90) at the peripheral surface (51) at an acute angle.

7. Anchoring bar according to one of Claims 2 to 4, **characterised in that** the conveying devices (9) are threadlike profiles (95) in the peripheral surface (51) of the head section (5) the rotary orientation of which coincides with the rotary orientation of the coarse threaded profiled conveying section (10).

8. Anchoring bar according to Claim 7, **characterised in that** the coarse threaded profile (11) of the conveying section (10) has a larger thread length (s1, s2, s3) and thread depth (t) than the threaded profiles (95) of the head section (5).

9. Anchoring rod according to one of Claims 1 to 8, **characterised in that** the anchoring area (4) comprises a surface which is non-adhesive to organic and/or inorganic mortar substances and preferably galvanically smoothly nickel- and/or chromium-plated.

## Revendications

1. Tige d'ancrage pour dispositif d'ancrage composite, comprenant une zone d'ancrage (4) qui peut être mise en place dans une masse de mortier durcissable inorganique et/ou organique, et une zone arrière (1) qui s'y raccorde et qui est munie de moyens (2) pour l'application de charge, la zone d'ancrage (4) comprenant une portion avant de mélange (5), une portion de refoulement (10) qui s'y raccorde et une portion de compactage (13) adjacente à la précédente, la portion de mélange (5) étant formée par une partie de tête qui, à son extrémité libre (6), est munie d'un taillant (7) s'étendant sensiblement perpendiculairement à l'axe (A) de la tige d'ancrage et comporte une zone (53) avec un diamètre extérieur (c) qui est supérieur au diamètre maximal (d) des autres portions (10, 13) de la zone d'ancrage (4), des dispositifs de refoulement (9) pour la masse de mortier étant prévus sur la partie de tête (5), **caractérisée en ce que** la portion de refoulement (10) est profilée à la manière d'un filetage à pas grossier (11) et comporte des portions à configuration sensiblement conique (12) qui s'élargissent en direction de l'extrémité avant libre (6).

2. Tige d'ancrage selon la revendication 1, **caractérisée en ce que** le diamètre extérieur (c) excédant le diamètre maximal (d) des portions (10, 13) raccordées à la partie de tête (5) est égal à environ 1,05 fois à environ 1,07 fois le diamètre maximal (c).

3. Tige d'ancrage selon la revendication 1 ou 2, **caractérisée en ce que** la partie de tête (5) s'élargit sous forme conique vers l'extrémité libre (6) et débouche dans la zone de diamètre maximal (53), laquelle possède une forme cylindrique de longueur (l) qui correspond à environ 50 % à environ 75 % de la longueur de la partie de tête (5) et qui, à son extrémité avant libre (6), comporte le taillant (7).

4. Tige d'ancrage selon une des revendications 1 à 3, **caractérisée en ce que** les dispositifs de refoulement (9) sont disposés dans la zone de diamètre maximal (53) de la partie de tête (5) et sont formés par un profilage de la surface périphérique (51).

5. Tige d'ancrage selon la revendication 4, **caractérisée en ce que** le profilage de la surface périphérique (51) est un moletage en forme de stries d'extension sensiblement axiale (90) qui s'étendent de l'extrémité avant libre (6) à la portion de refoulement (10).

6. Tige d'ancrage selon la revendication 5, **caractérisée en ce que** les stries (90) présentent une profondeur (t) d'environ 0,5 mm à environ 2,5 mm et une largeur maximale (w) d'environ 1 mm à environ 3 mm et possèdent des flancs (91) qui s'étendent en biais du fond de strie (92) à la surface périphérique (51) et qui, en formant une arête d'extension sensiblement axiale (93) sur la surface périphérique (51), rencontrent à angle aigu les flancs (91) de stries voisines (90).

7. Tige d'ancrage selon une des revendications 2 à 4, **caractérisée en ce que** les dispositifs de refoulement (9) sont des profilages en forme de filetages (95) dans la surface périphérique (51) de la partie de tête (5), dont le sens de rotation coïncide avec le sens de rotation de la portion de refoulement profilée en forme de filetage à pas grossier (10).

8. Tige d'ancrage selon la revendication 7, **caractérisée en ce que** le profilage en forme de filetage à pas grossier (11) de la portion de refoulement (10) présente un pas de filetage (s1, s2, s3) et une profondeur de filetage (t) supérieurs à ceux des profilages en forme de filetages (95) de la partie de tête (5).

9. Tige d'ancrage selon une des revendications 1 à 8, **caractérisée en ce que** la zone d'ancrage (4) comporte une surface non adhérente à la masse de mortier organique et/ou inorganique et est de préférence traitée par nickelage électrolytique brillant et/ou par chromage.
